# EUROPÄISCHE PATENTSCHRIFT

(11) **EP 1 288 508 B1**
(45) Veröffentlichungstag und Bekanntmachung des Hinweises auf die Patenterteilung: **06.12.2006**
(21) Anmeldenummer: 02450165.2
(22) Anmeldetag: 25.07.2002
(51) Int. Cl.: F16B 12/12

(54) **Steckverbindung**
Plug and socket connecter
Connexion enfichable

(30) Priorität: 03.09.2001 AT 13912001
(43) Veröffentlichungstag der Anmeldung: 05.03.2003
(73) Patentinhaber: Harrer, Vinzenz, 8162 Neudorf bei Pass (AT)
(72) Erfinder: Harrer, Vinzenz, 8162 Neudorf bei Pass (AT)
(74) Vertreter: Gibler, Ferdinand

(56) Entgegenhaltungen:
- DE-U- 29 820 031
- GB-A- 2 281 367
- US-A- 5 687 942
- US-B1- 6 200 062

## Beschreibung

Die Erfindung betrifft eine Steckverbindung für lösbare Verbindungen in der Art eines Nut-Feder-Systems, wobei die Nut wenigstens teilweise hinterschnitten und an zumindest einer ersten Stirnseite randoffen ist, und wobei der zur Längsrichtung der Nut im wesentlichen senkrechte Nutquerschnitt in einem an die erste Stirnseite anschließenden ersten Bereich von der ersten Stirnseite weg in Längsrichtung sich keilförmig verjüngend und in einem anschließenden zweiten Bereich in Längsrichtung konstant bleibend ausgebildet ist, wobei der Nutquerschnitt zumindest im zweiten Bereich hinterschnitten ist.

Bekannte derartige Steckverbindungen weisen keilförmige Nuten auf. Nachteilig an diesen Steckverbindungen ist, daß eine sichere Verbindung nur dann gegeben ist, wenn die Feder bis zum Anschlag in die Nut eingeschoben ist. Daher ergibt sich bei diesen bekannten Steckverbindungen öfters die Situation, daß sich bei ungenau positionierten Nuten und/oder Federn keine hinreichend stabile Verbindung ergibt und ein seitliches Spiel zwischen den verbundenen Teilen bestehen bleibt.

Aus der DE 298 20 031 U ist eine Verbindungseinrichtung bekannt, welche aus einer Nut und einer Feder aufgebaut ist. Dabei weist die Nut eine Einführmündung und die Feder eine Abschrägung auf, welche es erleichtern, die Teile ineinanderzuschieben.

Aufgabe der Erfindung ist es, eine Steckverbindung bereitzustellen, bei der die zu verbindenden Teile auch dann sicher verbunden werden können, wenn die Mittellinie von Nut und Feder unmittelbar vor dem Verbinden einen seitlichen Versatz aufweist.

Erfindungsgemäß wird dies dadurch erreicht, daß die Feder gegengleich zur Nut ausgebildet ist, wobei die Feder einen weiteren ersten Bereich mit einem im wesentlichen zur Längsrichtung der Feder senkrechten, sich in Längsrichtungder Feder verjüngenden Federquerschnitt, und einen anschließenden weiteren zweiten Bereich mit in Längsrichtung konstant bleibendem Federquerschnitt aufweist.

Dadurch ergibt sich der Vorteil, daß der erste Bereich als Einführhilfe wirkt, wodurch Nut und Feder auch bei einem kleinen Versatz zwischen ihren Mittellinien sicher verbunden werden können und der zweite Bereich eine Verbindung ohne seitliches Spiel auch bei nicht vollständig in die Nut eingeschobener Feder gewährleistet.

In Weiterbildung der Erfindung kann vorgesehen sein, daß der Nutquerschnitt zumindest im zweiten Bereich schwalbenschwanzförmig ausgebildet ist.

Die schwalbenschwanzförmige Ausbildung des Nutquerschnitts bietet eine Führung aus, die sicherstellt, daß die Feder, falls sie nicht im vorbestimmten Abstand zur Nut in die Nut geschoben wird, in den vorbestimmten Abstand geführt wird, wobei es nicht zu einem unerwünschten vorzeitigen Anschlag bei der Bewegung zwischen Nut und Feder kommt.

Gemäß einer anderen Ausführungsform der Erfindung kann vorgesehen sein, daß die Nut an ihrer der ersten Stirnseite gegenüberliegenden zweiten Stirnseite geschlossen und abgerundet ausgebildet ist.

Die Abrundung der Nut bildet einen Anschlag für die gegengleich ausgebildete Feder, wobei durch die abgerundete Form eine gleichmäßige Spannungsverteilung sichergestellt wird, insbesondere ohne sonst üblichen Spannungsspitzen in den Bereichen von Ecken. Weiters ist bei einem verkanteten Ansetzen der Feder in die Nut aufgrund der Abrundung der Feder ein einfaches Verdrehen in die richtige Lage ermöglicht.

In weiterer Ausgestaltung der Erfindung kann vorgesehen sein, daß die Längserstreckung des zweiten Bereichs größer als die des ersten Bereichs ist, insbesondere mindestens doppelt so groß ist.

Durch diese Ausgestaltung wird sichergestellt, daß eine hinreichend große seitliche Führung auch bei nicht vollständig eingeschobener Feder vorhanden ist.

Gemäß einer weiteren Ausführungsform der Erfindung kann vorgesehen sein, daß die Nut in einen im wesentlichen flachen, insbesondere quaderförmigen, Block ausgebildet ist, welcher eine vorzugsweise ebene Rückseite aufweist, und daß der Block Durchtritte aufweist, wodurch er mittels Schrauben, Nieten od. dgl. mit einem Körper verbindbar ist, wobei die Rückseite dem Körper angrenzend angeordnet ist.

Auf diese Weise kann die Nut in einfacher Weise mit einem Körper verbunden werden, ohne daß sie in diesen eingefräst od. dgl. werden muß, wodurch für die Ausbildbarkeit der Nut die Wandstärke des Körpers unerheblich ist.

In weiterer Ausgestaltung der Erfindung kann vorgesehen sein, daß die Feder des Nut-Feder-Systems als Feder-Block ausgebildet ist, und daß der Feder-Block weitere Durchtritte aufweist, wodurch er mittels Schrauben od. dgl. mit einem Körper verbindbar ist, wobei eine weitere Rückseite an dem Körper angrenzend angeordnet ist.

Mittels des Feder-Blocks kann die Feder auf einfache Weise mit einem Körper verbunden werden, ohne daß die Ausbildbarkeit der Feder bereits bei der Konstruktion des Körpers berücksichtigt werden muß.

Gemäß einer weiteren Ausführungsform der Erfindung kann vorgesehen sein daß der Feder-Block einstückig an eine Platte angeformt ist, welche die weitere Rückseite ausbildet.

Durch die Anformung der Platte werden die zu übertragenden Kräfte auf einen größeren Bereich aufgeteilt, so daß sich eine geringere Spannung im Körper ergibt, wodurch die Gefahr einer Überbeanspruchung verringert wird.

In Weiterführung der Erfindung kann vorgesehen sein, daß wenigstens einer der Durchtritte und/oder der weiteren Durchtritte zur Rückseite und/oder der weiteren Rückseite geneigt angeordnet ist.

Durch die geneigte Anordnung der Durchtritte und/oder der weiteren Durchtritte und damit der Befestigungsmittel kann eine bessere Verbindung der Nut und/oder der Feder mit dem jeweiligen Körper erzielt werden.

In weiterer Ausbildung der Erfindung kann vorgesehen sein, daß jeweils wenigstens zwei der Durchtritte und/oder der weiteren Durchtritte unterschiedliche Ausrichtungen aufweisen.

Durch die unterschiedliche Ausrichtung der Durchtritte und/oder der weiteren Durchtritte wird gewährleistet, daß die Nut und/oder die Feder spielfrei mit dem jeweiligen Körper verbunden ist.

Gemäß einer anderen Ausführungsform der Erfindung kann vorgesehen sein, daß die Durchtritte an der Rückseite des Blocks in Richtung wenigstens einer Mittelebene, welche mit der Rückseite einen im wesentlichen rechten Winkel einschließt, weisen.

Durch diese Anordnung der Durchtritte wird sichergestellt, daß alle Befestigungsmittel im Körper unterhalb des Blocks angeordnet sind.

In Weiterbildung der Erfindung kann vorgesehen sein, daß die weiteren Durchtritte an der weiteren Rückseite des Feder-Blocks in Richtung wenigstens einer Mittelebene, welche mit der weiteren Rückseite einen im wesentlichen rechten Winkel einschließt, weisen.

Durch diese Anordnung der weiteren Durchtritte wird sichergestellt, daß alle Befestigungsmittel im Körper unterhalb der Feder angeordnet sind.

Die Erfindung wird unter Bezugnahme auf die beigeschlossenen Zeichnungen, in welchen Ausführungsfornien dargestellt sind, näher beschrieben. Dabei zeigt:
- Fig.1: die Draufsicht auf einen Block mit der Nut einer erfindungsgemäßen Steckverbindung;
- Fig.2: die Seitenansicht des Blocks gemäß Fig. 1 im Schnitt;
- Fig.3: die Schnittansicht des Blocks gemäß der Linie AA in Fig. 1;
- Fig.4: die Draufsicht auf die Feder einer erfindungsgemäßen Steckverbindung;
- Fig.5: die Seitenansicht der Feder gemäß Fig. 4;
- Fig.6: die Schnittansicht der Feder gemäß der Linie BB in Fig. 4, und
- Fig.7: die Schnittansicht der Feder gemäß der Linie CC in Fig. 4.

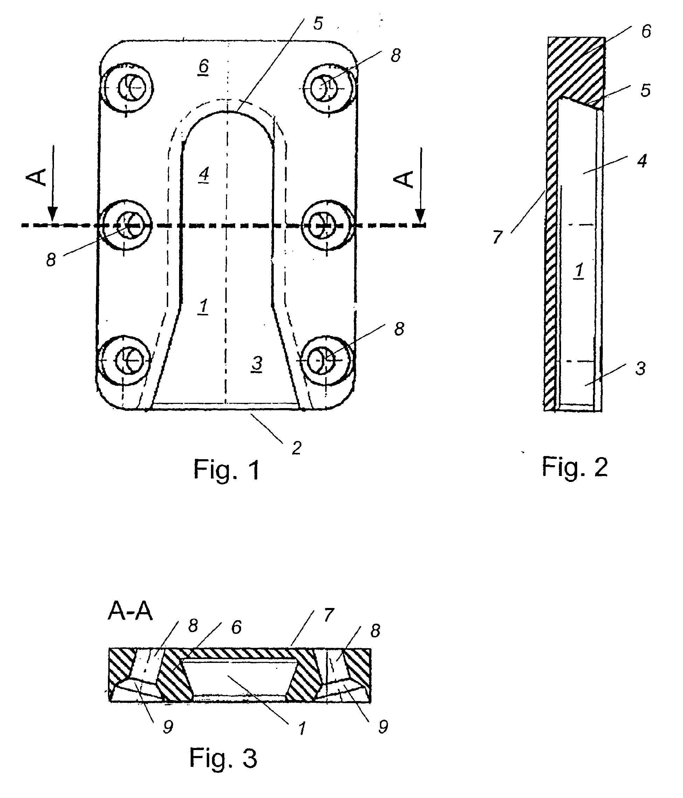

In den Fig. 1 bis 3 ist ein Block 6 in Draufsicht, einer Seitenansicht im Schnitt und einer Schnittansicht gemäß der Linie AA in Fig. 1 dargestellt. Der Block 6 weist eine Nut 1 einer erfindungsgemäßen Steckverbindung für lösbare Verbindungen in der Art eines Nut-Feder-Systems auf. Die Nut 1 ist hinterschnitten und an einer ersten Stirnseite 2 randoffen, wobei der zur Längsrichtung der Nut 1 im wesentlichen senkrechte Nutquerschnitt in einem an die erste Stirnseite 2 anschließenden ersten Bereich 3 von der ersten Stirnseite 2 weg in Längsrichtung sich keilförmig verjüngend und in einem anschließenden zweiten Bereich 4 in Längsrichtung konstant bleibend ausgebildet ist, wobei der Nutquerschnitt zumindest im zweiten Bereich 4 hinterschnitten ist.

Aus Fig. 3 ist ersichtlich, daß der Nutquerschnitt im zweiten Bereich 4 schwalbenschwanzförmig ausgebildet ist, und aus Fig. 1, daß die Nut 1 an ihrer der ersten Stirnseite 2 gegenüberliegenden zweiten Stirnseite 5 geschlossen und abgerundet ausgebildet ist. Bei anderen Ausführungen einer erfindungsgemäßen Steckverbindung kann die zweite Stirnseite 4 auch offen oder geschlossen und als Polygonzug oder oval ausgebildet sein. Neben der schwalbenschwanzförmigen Ausgestaltung der Nut 1 sind bei anderen Ausführungsformen auch andere hinterschnittene Nutformen vorgesehen.

Bei der gezeigten Ausführungsform ist gemäß Fig. 1 die Längserstreckung des zweiten Bereichs 4 größer als die des ersten Bereichs 3, wobei sie sogar mehr als doppelt so groß ist.

Der erste Bereich 3 bietet den Vorteil, daß auch eine nicht exakt positionierte Feder 11 leicht in die Nut 1 eingebracht werden kann, da der konische Bereich eine seitliche Führung darstellt, wodurch die Feder 1 ausgerichtet wird. Die schwalbenschwanzförmige Nut 1 stellt ebenfalls ein Führungssystem dar, welches den richtigen Abstand zwischen Nut 1 und Feder 11 bewirkt.

Die Nut 1 kann entweder direkt in einem Körper, oder, wie in der dargestellten Ausführungsform, in dem flachen, insbesondere quaderförmigen, Block 6 ausgebildet sein, wobei der Block 6 mit dem Körper verbindbar ist, wobei eine dem Körper 6 angepaßte Rückseite 7 des Blocks 6 am Körper anliegt. Für die Verbindung weist der Block 6 Durchtritte 8 auf, sodaß er mittels Schrauben, Nieten od. dgl. mit dem Körper verbindbar ist.

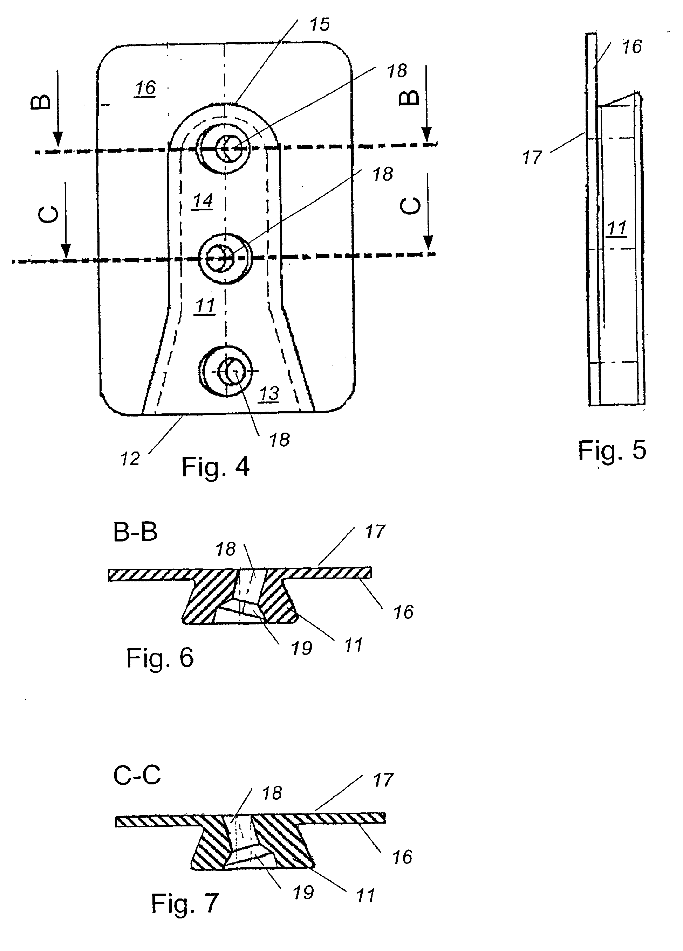

Die Feder der erfindungsgemäßen Steckverbindung ist gegengleich zur Nut 1 ausgebildet und kann entweder direkt an einem Körper angeformt oder als Feder-Block 11, der mit dem Körper verbindbar ist, ausgebildet sein. In den Fig. 4 und 5 sind die Draufsicht und die Seitenansicht des Feder-Blocks 11, der die Feder 11 zur Nut 1 gemäß den Fig. 1 bis 3 ausbildet, dargestellt. Die Fig. 6 zeigt den Schnitt durch den Feder-Block 11 gemäß der Linie BB in Fig. 4 und Fig. 7 den Schnitt durch den Feder-Block 11 gemäß der Linie CC in Fig. 4.

Die Feder 11 weist eine weitere erste Stirnseite 12, einen weiteren ersten Bereich 13 mit einem im wesentlichen zur Längsrichtung der Feder 11 senkrechten, sich in Längsrichtung der Feder 11 von der weiteren ersten Stirnseite 12 weg verjüngenden Federquerschnitt, einem weiteren zweiten Bereich 14 mit konstant bleibenden Federquerschnitt und einer der weiteren ersten Stirnseite 12 gegenüberliegenden weiteren zweiten Stirnseite 15, die abgerundet ausgebildet ist, auf.

An den Feder-Block 11 ist einstückig eine Platte 16 angeformt, welche eine weitere Rückseite 17 aufweist, die bei der Verbindung mit dem Körper an diesem anliegt. Für die Verbindung mit dem Körper mittels Schrauben od. dgl. weist der Feder-Block 11 weitere Durchtritte 18 auf.

Bei der gezeigten Ausführungsform sind die Durchtritte 8 schräg zur Rückseite 7 und die weiteren Durchtritte 18 schräg zur weiteren Rückseite 17 angeordnet. Mit dieser Anordnung wird ein besserer Halt von Schrauben od. dgl. im Körper erreicht, da bei einer Belastung nicht nur die Gewindegänge der Schraube, sondern auch die in Richtung der einwirkenden Kraft projizierte Fläche der Schraube Halt bieten.

Durch die unterschiedliche Ausrichtung der Durchtritte 8 kann der Block 6 spielfrei mit dem Körper verbunden werden. Analoges gilt für den Feder-Block 11.

Werden die Durchtritte 8 so angeordnet, daß sie an der Rückseite 7 des Blocks 6 in Richtung wenigstens einer Mittelebene, welche mit der Rückseite 7 einen im wesentlichen rechten Winkel einschließt, weisen, so wird sichergestellt, daß die Befestigungsmittel unterhalb des Blocks 6 im Körper angeordnet sind. Wird der Block 6 an einer Kante des Körpers angebracht, so ist sichergestellt, daß kein Befestigungsmittel seitlich aus dem Körper ragen kann.

Analoges gilt für den Feder-Block 11, wenn die weiteren Durchtritte 18 an der weiteren Rückseite 17 in Richtung wenigstens einer Mittelebene, welche mit der weiteren Rückseite 17 einen im wesentlichen rechten Winkel einschließt, weisen.

Bei einer anderen Ausführungsform der Erfindung können auch alle Durchtritte 8 und/oder weiteren Durchtritte 18 parallel angeordnet sein, wobei sie auch im rechten Winkel zur Rückseite 7 und/oder weiteren Rückseite 17 angeordnet sein können.

Auf der der Rückseite 7 gegenüberliegenden Seite weisen die Durchtritte 8 und auf der der weiteren Rückseite 17 gegenüberliegenden Seite weisen die weiteren Durchtritte 18 Erweiterungen 9, 19 auf, die Schraubenköpfe aufnehmen können.

## Patentansprüche

1. Steckverbindung für lösbare Verbindungen in der Art eines Nut-Feder-Systems, wobei die Nut (1) wenigstens teilweise hinterschnitten und an zumindest einer ersten Stirnseite (2) randoffen ist, und wobei der zur Längsrichtung der Nut (1) im wesentlichen senkrechte Nutquerschnitt in einem an die erste Stirnseite (2) anschließenden ersten Bereich (3) von der ersten Stirnseite (2) weg in Längsrichtung sich keilförmig verjüngend und in einem anschließenden zweiten Bereich (4) in Längsrichtung konstant bleibend ausgebildet ist, wobei der Nutquerschnitt zumindest im zweiten Bereich (4) hinterschnitten ist, **dadurch gekennzeichnet, daß** die Feder (11) gegengleich zur Nut ausgebildet ist, wobei die Feder einen weiteren ersten Bereich (13) mit einem im wesentlichen zur Längsrichtung der Feder (11) senkrechten, sich in Längsrichtung der Feder (11) verjüngenden Federquerschnitt, und einen anschließenden weiteren zweiten Bereich (14) mit in Längsrichtung konstant bleibendem Fedcrquerschnitt aufweist.

2. Steckverbindung nach Anspruch 1, **dadurch gekennzeichnet, daß** der Nutquerschnitt zumindest im zweiten Bereich (4) scbwalbenschwanzförnüg ausgebildet ist.

3. Steckverbindung nach Anspruch 1 oder 2, **dadurch gekennzeichnet, daß** die Nut (1) an ihrer der ersten Stirnseite (2) gegenüberliegenden zweiten Stirnseite (5) geschlossen und abgerundet ausgebildet ist.

4. Steckverbindung nach einem der Ansprüche 1 bis 3, **dadurch gekennzeichnet, daß** die Längserstreckung des zweiten Bereichs (4) größer als die des ersten Bereichs (3) ist, insbesondere mindestens doppelt so groß ist.

5. Steckverbindung nach einem der Ansprüche 1 bis 4, **dadurch gekennzeichnet, daß** die Nut (1) in einen im wesentlichen flachen, insbesondere quaderförmigen, Block (6) ausgebildet ist, welcher eine vorzugsweise ebene Rückseite (7) aufweist, und daß der Block (6) Durchtritte (8) aufweist, wodurch er mittels Schrauben, Nieten od. dgl. mit einem Körper verbindbar ist, wobei die Rückseite (7) dem Körper angrenzend angeordnet ist.

6. Steckverbindung nach einem der Ansprüche 1 bis 5, **dadurch gekennzeichnet, daß** die Feder des Nut-Feder-Systems als Feder-Block (11) ausgebildet ist, und daß der Feder-Block (11) weitere Durchtritte (18) aufweist, wodurch er mittels Schrauben od. dgl. mit einem Körper verbindbar ist, wobei eine weitere Rückseite (17) an dem Körper angrenzend angeordnet ist.

7. Steckverbindung nach Anspruch 6, **dadurch gekennzeichnet, daß** der Feder-Block (11) einstückig an eine Platte (16) angeformt ist, welche die weitere Rückseite (17) ausbildet.

8. Steckverbindung nach Anspruch 6 oder 7, **dadurch gekennzeichnet, daß** wenigstens einer der Durchtritte (8) und/oder der weiteren Durchtritte (18) zur Rückseite (7) und/oder der weiteren Rückseite (17) geneigt angeordnet ist.

9. Steckverbindung nach einem der Ansprüche 6 bis 8, **dadurch gekennzeichnet, daß** jeweils wenigstens zwei der Durchtritte (8) und/oder der weiteren Durchtritte (18) unterschiedliche Ausrichtungen aufweisen.

10. Steckverbindung nach einem der Ansprüche 5 bis 9, **dadurch gekennzeichnet, daß** die Durchtritte (8) an der Rückseite (7) des Blocks (6) in Richtung wenigstens einer Mittelebene, welche mit der Rückseite (7) einen im wesentlichen rechten Winkel einschließt, weisen.

11. Steckverbindung nach einem der Ansprüche 6 bis 9, **dadurch gekennzeichnet, daß** die weiteren Durchtritte (18) an der weiteren Rückseite (17) des Feder-Blocks (11) in Richtung wenigstens einer Mittelebene, welche mit der weiteren Rückseite (17) einen im wesentlichen rechten Winkel einschließt, weisen.

## Claims

1. A connector for detachable connections in the manner of a groove-and-tongue system, with the groove (1) being at least partly undercut and being open on the edge on at least one face side (2), and with the groove cross section which is substantially perpendicular to the longitudinal direction of the groove (1) being formed in a wedge-like tapering manner in a first section (3) adjacent to the first face side (2) away from the first face side (3) in the longitudinal direction and remaining constant in the longitudinal direction in an adjacent second section (4), with the groove cross section being undercut in at least the second section (4), **characterized in that** the spring (11) is arranged diametrically opposed to the groove, with the spring comprising a further first section (13) with a spring cross section which is substantially perpendicular to the longitudinal direction of the spring (11) and tapers in the longitudinal direction of the spring (11), and an adjacent further second section (14) with a spring cross section which remains constant in the longitudinal direction.

2. A connector according to claim 1, **characterized in that** the groove cross section is provided with a dovetail-like configuration at least in the second section (4).

3. A connector according to claim 1 or 2, **characterized in that** the groove (1) is provided on its second face (5) which is opposite of the first face side (2) in a closed and rounded manner.

4. A connector according to one of the claims 1 to 3, **characterized in that** the longitudinal extension of the second section (4) is larger than that of the first section (3), especially at least twice as large.

5. A connector according to one of the claims 1 to 4, **characterized in that** the groove (1) is formed in a substantially flat, especially cuboid block (6) which comprises a preferably planar rear side (7), and that the block (6) comprises passages (8) by means of which it can be joined to a body by means of screws, rivets or the like, with the rear side (7) being arranged adjacent to the body.

6. A connector according to one of the claims 1 to 5, **characterized in that** the tongue of the tongue-and-groove system is arranged as a tongue block (11) and that the tongue block (11) comprises further passages (18), as a result of which it can be joined by means of screws or the like to a body, with a further rear side (17) being arranged adjacent to the body.

7. A connector according to claim 6, **characterized in that** the tongue block (11) is formed in an integral manner on a plate (16) which forms the further rear side (17).

8. A connector according to claim 6 or 7, **characterized in that** at least one of the passages (8) and/or the further passages (18) to the rear side (7) and/or the further rear side (17) are arranged in an inclined manner.

9. A connector according to one of the claims 6 to 8, **characterized in that** at least two each of the passages (8) and/or the further passages (18) have different orientations.

10. A connector according to one of the claims 5 to 9, **characterized in that** the passages (8) on the rear side (7) of the block (6) face in the direction of at least one central plane which encloses a substantially right angle with the rear side (7).

11. A connector according to one of the claims 6 to 9, **characterized in that** the further passages (18) on the further rear side (17) of the tongue block (11) face in the direction of at least one central plane which encloses a substantially right angle with the further rear side (17).

## Revendications

1. Connexion enfichable pour branchements amovibles du type d'un système à gorge et ressort, dans laquelle la gorge (1) est au moins partiellement en contre-dépouille et ouverte sur le bord sur au moins une première face d'extrémité (2), et dans laquelle la section de la gorge (1) sensiblement perpendiculaire à l'axe longitudinal de la gorge se resserre dans une première partie (3) faisant suite à la première face d'extrémité (2) à partir de la première face d'extrémité (2) dans le sens longitudinal et reste constante dans une deuxième partie (4) suivante dans le sens longitudinal, la section de la gorge étant en contre-dépouille au moins dans la deuxième partie (4), **caractérisée en ce que** le ressort (11) est conformé de façon symétrique à la gorge, le ressort possédant une première partie (13) dont la section de ressort perpendiculaire à l'axe longitudinal du ressort (11) se resserre sensiblement dans le sens longitudinal du ressort (11) et une deuxième partie (14) qui lui fait suite et dont la section reste constante dans le sens longitudinal.

2. Connexion enfichable selon la revendication 1, **caractérisée en ce que** la section de la gorge est en forme de queue d'aronde au moins dans la deuxième partie (4).

3. Connexion enfichable selon la revendication 1 ou 2, **caractérisée en ce que** la gorge (1) est fermée et arrondie sur sa deuxième face d'extrémité (5) opposée à la première face d'extrémité (2).

4. Connexion enfichable selon l'une des revendications 1 à 3, **caractérisée en ce que** l'étendue longitudinale de la deuxième partie (4) est plus grande que celle de la première partie (3), en particulier au moins deux fois plus grande.

5. Connexion enfichable selon l'une des revendications 1 à 4, **caractérisée en ce que** la gorge (1) est formée dans un bloc (6) sensiblement plat, notamment carré, qui a de préférence une face arrière (7) plane, et **en ce que** le bloc (6) présente des passages (8) à travers lesquels il peut être assemblé à un corps au moyen de vis, de rivets ou similaires, la face arrière (7) étant disposée contiguë du corps.

6. Connexion enfichable selon l'une des revendications 1 à 5, **caractérisée en ce que** le ressort du système de gorge et de ressort est conçu comme un bloc de ressort (11) et **en ce que** le bloc de ressort (11) présente d'autres passages (18) à travers lesquels il peut être assemblé à un corps au moyen de vis ou similaires, une autre face arrière (17) étant disposée contiguë du corps.

7. Connexion enfichable selon la revendication 6, **caractérisée en ce que** le bloc de ressort (11) est formé d'un seul tenant sur une plaque (16) qui constitue l'autre face arrière (17).

8. Connexion enfichable selon la revendication 6 ou 7, **caractérisée en ce que** l'un au moins des passages (8) et/ou des autres passages (18) est incliné par rapport à la face arrière (7) et/ou à l'autre face arrière (17).

9. Connexion enfichable selon l'une des revendications 6 à 8, **caractérisée en ce que** deux au moins des passages (8) et/ou des autres passages (18) ont des orientations différentes.

10. Connexion enfichable selon l'une des revendications 5 à 9, **caractérisée en ce que** les passages (8) sur la face arrière (7) du bloc (6) sont orientés en direction d'au moins un plan médian formant un angle sensiblement droit avec la face arrière (7).

11. Connexion enfichable selon l'une des revendications 6 à 9, **caractérisée en ce que** les autres passages (18) sur l'autre face amère (17) du bloc de ressort (11) sont orientés en direction d'au moins un plan médian formant un angle sensiblement droit avec l'autre face arrière (17).
